# FASCICULE DE BREVET EUROPEEN

(11) **EP 0 870 967 B1**
(45) Date de publication et mention de la délivrance du brevet: **23.10.2002**
(21) Numéro de dépôt: 98400788.0
(22) Date de dépôt: 02.04.1998
(51) Int. Cl.: F16L 37/092

(54) **Joint verrouillé entre éléments de canalisation et jonc fendu métallique utilisable dans un tel joint**
Verriegelte Verbindung für Rohrleitungen und geschlitzter Metallring zur Verwendung in einer solchen Verbindung
Locking connector for sewage pipes and split metallic ring used therein

(30) Priorité: 09.04.1997 FR 9704355
(43) Date de publication de la demande: 14.10.1998
(73) Titulaire: SAINT-GOBAIN PAM, 54000 Nancy (FR)
(72) Inventeur: Percebois, Alain, 54700 Blenod Les Pont-A-Mousson (FR); Maire, François, 54121 Vandieres (FR); Zacharie, Roland, 54700 Pont-A-Mousson (FR)
(74) Mandataire: Jacobson, Claude

(56) Documents cités:
- WO-A-96/18061
- WO-A-97/03314
- AT-B- 294 503
- CH-A- 222 019
- DE-A- 2 404 092
- DE-A- 2 730 611
- DE-U- 9 410 418
- GB-A- 922 299
- GB-A- 2 113 790
- US-A- 4 183 280
- US-A- 4 886 304

## Description

La présente invention est relative à joint verrouillé entre éléments de canalisation, notamment entre tuyaux, ainsi qu'à un jonc fendu métallique pouvant être utilisé dans un tel joint.

Les éléments de canalisation en question peuvent être non seulement des tuyaux, mais également des accessoires de canalisations tels que des éléments de robinetterie. Dans ce qui suit, on supposera qu'il s'agit de tuyaux.

Un joint verrouillé entre tuyaux est un assemblage étanche capable de résister aux efforts de déboîtement qui se développent lors de la mise en pression de la canalisation. Un joint verrouillé comprend typiquement un emboîtement d'un premier tuyau, un bout uni d'un second tuyau enfoncé dans cet emboîtement avec interposition d'une garniture d'étanchéité annulaire, un relief solidaire du bout uni, un jonc de verrouillage fendu disposé autour du bout uni, juste derrière ledit relief, et une surface d'appui arrière du jonc, solidaire de l'emboîtement (voir, par exemple, FR-A-2 505 014).

La surface d'appui arrière du jonc fendu peut appartenir à une contre-bride rapportée à l'entrée de l'emboîtement. Dans ce cas, le montage du joint nécessite simplement, de la part du jonc, une capacité d'ouverture ou d'expansion lui permettant de franchir le relief du bout uni. Dans d'autres configurations, au contraire, la surface d'appui arrière appartient à l'emboîtement lui-même et se trouve devant une collerette d'entrée de ce dernier. Le jonc fendu doit alors pouvoir, en outre, être contracté suffisamment pour franchir la collerette d'entrée de l'emboîtement.

Une technique utilisée pour contracter suffisamment le jonc fendu afin qu'il franchisse la collerette d'entrée consiste à croiser les extrémités du jonc à l'aide d'un outil approprié. Un tel croisement requiert une certaine souplesse du jonc, notamment vis-à-vis de la torsion.

Lorsque le diamètre des tuyaux est grand, par exemple supérieur ou égal à 400 mm, le jonc fendu peut être métallique, car la déformabilité élastique requise est obtenue naturellement avec les sections usuelles.

En revanche, pour les petits diamètres (<400 mm), la rigidité d'un jonc métallique devient telle qu'il faut faire appel à des matériaux plus souples tels que les plastomères.

Cependant, un jonc de verrouillage en matériau plastique, s'il est aisément déformable, présente l'inconvénient d'être peu performant en tenue à la pression, lorsque la canalisation est en service.

L'invention a pour but de fournir un joint verrouillé à jonc fendu métallique utilisable dans une gamme étendue de diamètres des éléments de canalisation et assurant une bonne tenue en pression.

A cet effet, l'invention a pour objet un joint verrouillé tel que défini dans la revendication 1.

Le joint suivant l'invention peut comporter une ou plusieurs des caractéristiques telles qu'énoncées dans les revendications dépendantes de la revendication 1.

L'invention a également pour objet un jonc fendu métallique utilisable dans un joint tel que défini ci-dessus et dont la structure lui confère à la fois une grande capacité de transmission d'efforts axiaux et une déformabilité élastique importante. Un tel jonc est défini dans la revendication 14.

Le jonc peut comprendre une ou plusieurs des caractéristiques telles que définies dans les revendications dépendantes de la revendication 14.

Des exemples de réalisation de l'invention vont maintenant être décrits en regard des dessins annexés, sur lesquels :
- la Figure 1 est une demi-vue en coupe longitudinale d'un joint verrouillé suivant l'invention;
- la Figure 2 est une vue schématique de face du jonc de verrouillage de ce joint;
- la Figure 3 est une vue schématique partielle, suivant la flèche 3 de la Figure 2, illustrant la contraction du jonc pour son introduction dans l'emboîtement;
- la Figure 4 est une vue analogue à la Figure 3, illustrant l'expansion du jonc avant introduction du bout uni dans l'emboîtement;
- la Figure 5 est une vue en perspective d'une variante du jonc des Figures 2 à 4;
- la Figure 6 est une vue analogue à la Figure 2 d'un autre mode de réalisation du jonc de verrouillage de l'invention;
- la Figure 7 est une vue schématique de côté du jonc de la Figure 6;
- la Figure 8 est une vue de face d'un troisième mode de réalisation du jonc de verrouillage suivant l'invention;
- la Figure 9 est une vue de côté du jonc de la Figure 8;
- la Figure 10 est une vue prise en coupe suivant la ligne 10-10 de la Figure 8; et
- la Figure 11 est une vue partielle prise suivant la flèche 11 de la Figure 8.

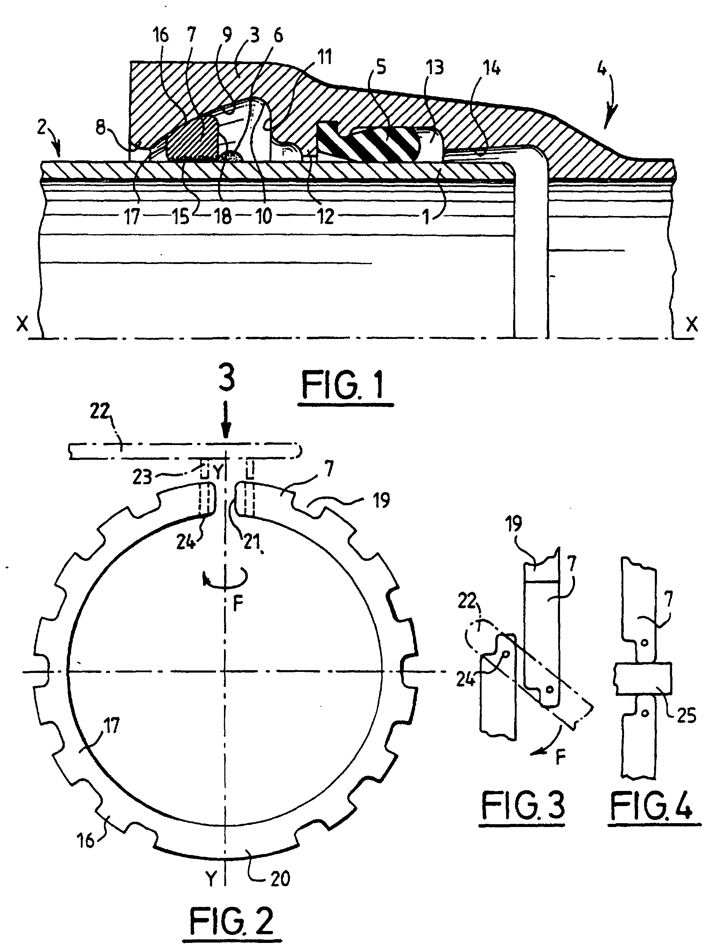

Le joint verrouillé représenté sur la Figure 1 est du type décrit dans le FR-A-2 505 014 au nom de la Demanderesse, à l'exception de la constitution du jonc de verrouillage. Il comprend un bout uni 1 appartenant à un premier tuyau 2 d'une canalisation, un emboîtement 3 appartenant à un second tuyau 4 de la canalisation, une garniture d'étanchéité 5 à compression radiale, un cordon de soudure 6 (ou, en variante, un relief de butée venu de fonderie) entourant au moins partiellement le bout uni et contenu dans un plan transversal de celui-ci, et un jonc de verrouillage 7. Les deux tuyaux 2 et 4 sont en fonte à graphite lamellaire ou sphéroidal, le jonc 7 est métallique, par exemple également en fonte à graphite lamellaire ou sphéroidal, et la garniture 5 est en élastomère. Les deux tuyaux ont été représentés parfaitement alignés suivant un axe commun X-X.

D'arrière en avant, c'est-à-dire à partir de son entrée, l'emboîtement présente intérieurement : une collerette d'entrée 8 de diamètre nettement supérieur à celui du bout uni; une cavité de verrouillage qui définit une surface d'appui arrière bombée 9, cette surface se raccordant par un arrondi 10 à une paroi avant plane et transversale 11 de la cavité; une collerette 12 de guidage du bout uni; une cavité 13 de logement et de retenue de la garniture 5; et un chambrage final 14 recevant l'extrémité du bout uni.

Le jonc de verrouillage 7 est un anneau fendu dont la section courante, pleine et à profil convexe, a une forme générale trapézoïdale, avec une surface radialement intérieure 15 cylindrique, éventuellement dentée ou moletée comme représenté sur la Figure 1, une surface radialement extérieure 16 de forme bombée; une petite face arrière plane et transversale 17; et une grande face avant plane et transversale 18. En service, comme représenté, la face avant 18 est appliquée contre le cordon de soudure 6 et la face extérieure 16 est appliquée sur la surface 9, ce qui autorise un débattement angulaire entre les deux tuyaux.

Dans le mode de réalisation de la Figure 2, le jonc fendu 7 présente sur son pourtour une série d'encoches radiales 19 de même largeur ménagées dans la surface 16. Chaque encoche a des génératrices parallèles à l'axe X-X et débouche sur les deux faces 17 et 18. Dans cet exemple, les encoches sont à peu près régulièrement réparties sur la circonférence, à l'exception de la région 20 du jonc diamétralement opposée à sa fente 21, cette région 20 étant dépourvue d'encoche.

La présence des encoches 19 augmente considérablement la souplesse circonférentielle du jonc dans la région de la fente 21, tout en permettant au jonc de conserver une capacité élevée de résistance aux efforts axiaux lorsque la canalisation est en service. Ainsi, pour introduire le jonc dans l'emboîtement, on utilise, comme il est bien connu dans la technique, un levier 22 muni de deux picots 23, représenté en traits mixtes sur les Figures 2 et 3. On introduit les deux picots dans des orifices radiaux correspondants 24 prévus de part et d'autre de la fente 21, et on fait tourner le levier autour de l'axe radial Y-Y de cette fente (flèche F des Figures 2 et 3). On amène ainsi les deux extrémités du jonc l'une à côté de l'autre (Figure 3). Cette opération réduit suffisamment le diamètre extérieur du jonc pour qu'il puisse franchir la collerette d'entrée 8 au début du montage du joint.

Puis on retire l'outil 22 et, au moyen d'un autre outil classique non représenté, on écarte l'une de l'autre les deux extrémités du jonc, et on dispose entre elles une cale 25 (Figure 4). Le diamètre intérieur du jonc est alors supérieur au diamètre extérieur du cordon de soudure 6, ce qui permet d'introduire le bout uni dans l'emboîtement à travers la collerette 8, le jonc expansé, la collerette 12 et la garniture 5, en comprimant radialement celle-ci. Le cordon de soudure 6 se trouve alors dans la cavité d'entrée de l'emboîtement, en avant du jonc 7.

Enfin, on retire la cale 25, de sorte que le jonc se contracte élastiquement et enserre le bout uni par l'intermédiaire de sa surface 15, et on fait reculer ce dernier pour que le jonc s'applique par sa face 16 contre la surface 9 de l'emboîtement, puis, en glissant sur le bout uni, par sa face avant 18 contre le cordon de soudure. Le montage du joint est alors terminé.

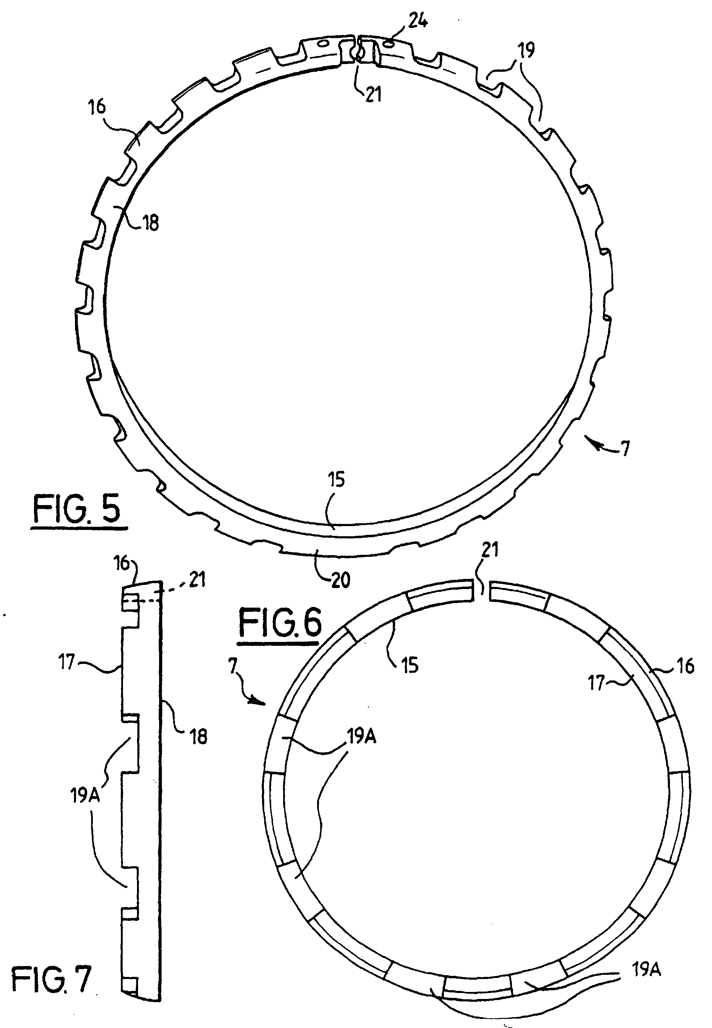

En variante (Figure 5), la profondeur des encoches 19 peut décroître progressivement de la région de la fente 21 à la région 20 diamétralement opposée. Ceci permet d'égaliser sensiblement, sur tout le pourtour du jonc, les contraintes subies par le métal de celui-ci lors des déformations décrites ci-dessus.

En variante également, les encoches 19 peuvent être prévues dans la face intérieure 15 du jonc, ou bien à la fois dans les faces 15 et 16, auquel cas elles sont de préférence alternées circonférentiellement.

Si, pour un diamètre donné, le jonc a une épaisseur axiale importante, la présence des seules encoches radiales 19 peut permettre d'expanser ou de refermer la fente 21. Ceci suffit lorsque la surface d'appui arrière du jonc fendu appartient à une contre-bride rapportée à l'entrée de l'emboîtement, mais ne permet pas d'atteindre la position déformée en torsion/flexion de la Figure 3, nécessaire pour introduire le jonc dans l'emboîtement comme à la Figure 1.

Dans ce cas, pour atteindre la position de la Figure 3, on peut utiliser le jonc fendu des Figures 6 et 7, qui diffère du précédent par le fait que les encoches 19A sont des encoches axiales ou frontales ménagées dans une face d'extrémité du jonc, de préférence dans la face arrière 17 comme représenté. De plus, les encoches sont régulièrement réparties sur tout le pourtour, y compris dans la région 20. Toutefois, aucune encoche ne se trouve à l'emplacement diamétralement opposé à la fente 21. Ces encoches 19A, à génératrices sensiblement radiales, débouchent radialement sur les surfaces 15 et 16.

Les encoches 19A augmentent considérablement la souplesse en torsion/flexion du jonc, tout en lui permettant de conserver une résistance élevée aux efforts axiaux lorsque la canalisation est en service.

Comme précédemment, la profondeur des encoches peut décroître progressivement de la région 21 à la région 20, pour homogénéiser les contraintes.

En variante ou en supplément, des encoches 19A peuvent être prévues dans la face avant 18 du jonc, avec éventuellement le décalage circonférentiel mentionné plus haut.

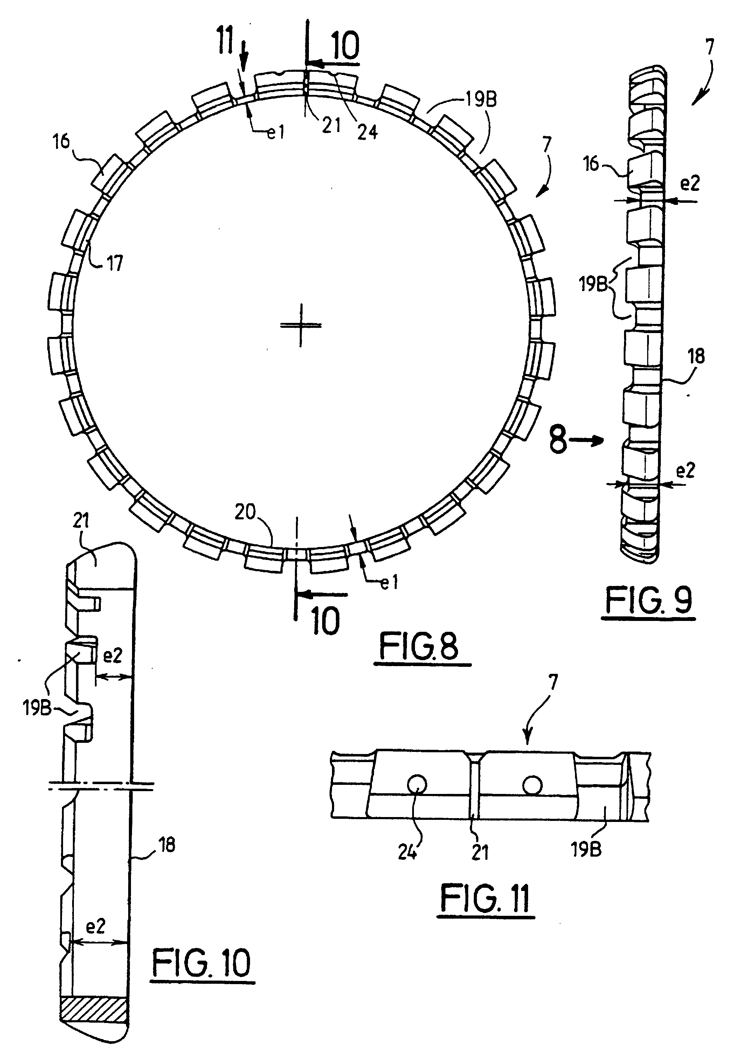

On comprend que, pour un diamètre donné, si l'épaisseur radiale du jonc est faible, la présence d'encoches axiales ou frontales 19A peut suffir à atteindre la position contractée de la Figure 3. Cependant, dans le cas contraire, il est nécessaire de disposer à la fois d'encoches radiales et d'encoches frontales. Ces encoches peuvent être distinctes les unes des autres, ou bien combinées comme dans le mode de réalisation des Figures 8 à 11.

Dans ce cas, les encoches mixtes 19B sont prévues sur tout le pourtour du jonc, y compris dans la région 20. Chaque encoche est constituée d'une encoche radiale 19 prolongée dans la face arrière 17 par une encoche 19A. De préférence, comme représenté, la profondeur des encoches décroît progressivement, dans les deux directions axiale et radiale, de la région 21 à la région 20; par suite, l'épaisseur radiale de métal e1 restant en fond d'encoche croît progressivement de la région 21 à la région 20 (Figure 8), et il en est de même de l'épaisseur axiale de matière e2 restant en fond d'encoche (Figures 9 et 10).

Il est à noter que les raccordements des fonds d'encoche avec les parois latérales de celle-ci sont de préférence des arrondis, pour réduire la fragilité dans ces zones.

## Revendications

1. Joint verrouillé entre éléments de canalisation (2, 4), notamment entre tuyaux, du type comprenant un emboîtement (3) d'un premier élément de canalisation (4), un bout uni (1) d'un second élément de canalisation (2) enfoncé dans cet emboîtement avec interposition d'une garniture d'étanchéité annulaire (5), un relief (6) solidaire du bout uni, un jonc de verrouillage métallique (7) présentant une fente (21), le jonc étant disposé autour du bout uni juste derrière ledit relief et susceptible d'être mis en place par contraction et croisement de ses extrémités pour pénétrer dans l'emboîtement, puis dilatation pour laisser passer ledit relief et relâchement pour enserrer le bout uni, et une surface (9) d'appui arrière du jonc, solidaire de l'emboîtement, **caractérisé en ce que** le jonc fendu (7) comporte sur le pourtour d'au moins une face (15 à 18) au moins un évidement (19; 19A; 19B) adapté(s) pour permettre la contraction, le croisement et la dilatation du jonc (7) nécessaires au montage du joint.

2. Joint selon la revendication 1, **caractérisé en ce qu'**au moins un évidement (19A) est un évidement axial ménagé dans une face d'extrémité axiale (17) du jonc et débouche dans la surface radialement intérieure (15) du jonc (7), laquelle enserre le bout uni (1).

3. Joint suivant la revendication 1, **caractérisé en ce que** le ou les évidements (19) sont des évidements radiaux débouchant dans une face d'extrémité radiale, de préférence dans la face radialement extérieure (16), du jonc (7) et ne débouchant pas dans la face d'extrémité radiale opposée.

4. Joint suivant la revendication 1 ou 2, **caractérisé en ce que** le ou les évidements (19A) sont des évidements axiaux débouchant dans une face d'extrémité axiale, de préférence dans la face arrière (17), du jonc (7) et ne débouchant pas dans la face d'extrémité axiale opposée.

5. Joint suivant la revendication 1 ou 2, **caractérisé en ce que** le jonc comporte une série d'évidements ménagés dans chacune de deux faces opposées, les deux séries d'évidements étant de préférence décalées circonférentiellement l'une par rapport à l'autre.

6. Joint suivant la revendication 1 ou 2, **caractérisé en ce que** le jonc comprend au moins un évidement radial débouchant dans une face d'extrémité radiale et ne débouchant pas dans la face d'extrémité radiale opposée du jonc (7), et au moins un autre évidement axial débouchant dans une face d'extrémité axiale du jonc et ne débouchant pas dans la face d'extrémité axiale opposée du jonc.

7. Joint suivant la revendication 1 ou 2, **caractérisé en ce qu'**au moins un évidement (19B) comprend une partie axiale (19A) et une partie radiale (19) qui se prolongent, la partie radiale (19) débouchant dans une face d'extrémité radiale du jonc et ne débouchant pas dans la face d'extrémité radiale opposée, la partie axiale (19A) débouchant dans une face d'extrémité axiale du jonc et ne débouchant pas dans la face d'extrémité axiale opposée.

8. Joint suivant l'une quelconque des revendications 1 à 7, **caractérisé en ce que** le jonc comprend au moins un premier évidement (19; 19A; 19B) situé dans la région diamétralement opposée à la fente (21) du jonc (7) ou au voisinage de cette région, et au moins un second évidement voisin de la fente et ayant une profondeur supérieure à celle dudit premier évidement.

9. Joint suivant la revendication 8, **caractérisé en ce que** l'emplacement du jonc diamétralement opposé à la fente (21) est dépourvu d'évidement.

10. Joint suivant la revendication 8 ou 9, **caractérisé en ce que** le jonc comporte une série d'évidements (19; 19A; 19B) dont la profondeur décroît progressivement de la région de la fente (21) à la région (20) diamétralement opposée.

11. Joint suivant l'une quelconque des revendications 8 à 10 lorsqu'elles dépendent de la revendication 7, **caractérisé en ce que** la profondeur des évidements (19B) varie d'une part dans le sens radial, d'autre part dans le sens axial.

12. Joint suivant l'une quelconque des revendications 1 à 11, **caractérisé en ce que** 1a section courante du jonc (7) est pleine et à profil convexe.

13. Joint suivant l'une quelconque des revendications 1 à 12, **caractérisé en ce que** le jonc (7) comporte, de part et d'autre de la fente (21), des ouvertures radiales (24) .

14. Jonc fendu métallique (7) pour un joint verrouillé entre éléments de canalisation, notamment entre tuyaux, le jonc comprenant sur le pourtour d'au moins une face (15 à 18) au moins un évidement (19; 19A; 19B) adapté(s) pour permettre les déformations du jonc (7) nécessaires au montage du joint, **caractérisé en ce qu'**au moins un évidement axial (19A) est ménagé dans une face d'extrémité axiale (17) du jonc et débouche dans la surface radialement intérieure (15) du jonc (7), laquelle est destinée à enserrer un bout uni (1) d'un des éléments de canalisation (2).

15. Jonc suivant la revendication 14, **caractérisé en ce que** le ou les évidements (19A) axiaux débouchent dans une face d'extrémité axiale, de préférence dans la face arrière (17), du jonc (7) et ne débouchent pas dans la face d'extrémité axiale opposée.

16. Jonc suivant la revendication 14, **caractérisé en ce que** le jonc comporte une série d'évidements ménagés dans chacune de deux faces opposées du jonc, les deux séries d'évidements étant de préférence décalées circonférentiellement l'une par rapport à l'autre.

17. Jonc suivant la revendication 14, **caractérisé en ce que** le jonc comprend au moins un évidement radial débouchant dans une face d'extrémité radiale du jonc (7) et ne débouchant pas dans la face d'extrémité axiale opposée du jonc (7), et au moins un autre évidement axial débouchant dans une face d'extrémité axiale du jonc et ne débouchant pas dans la face d'extrémité axiale opposée du jonc.

18. Jonc suivant la revendication 14, **caractérisé en ce qu'**au moins un évidement (19B) comprend une partie axiale (19A) et une partie radiale (19) qui se prolongent, la partie radiale (19) débouchant dans une face d'extrémité radiale du jonc et ne débouchant pas dans la face d'extrémité radiale opposée, la partie axiale (19A) débouchant dans une face d'extrémité axiale du jonc et ne débouchant pas dans la face d'extrémité axiale opposée.

19. Jonc suivant l'une quelconque des revendications 14 à 18 , **caractérisé en ce que** le jonc comprend au moins un premier évidement (19; 19A; 19B) situé dans la région diamétralement opposée à la fente (21) du jonc (7) ou au voisinage de cette région, et au moins un second évidement voisin de la fente et ayant une profondeur supérieure à celle dudit premier évidement.

20. Jonc suivant la revendication 19, **caractérisé en ce que** l'emplacement du jonc diamétralement opposé à la fente (21) est dépourvu d'évidement.

21. Jonc suivant la revendication 19 ou 20, **caractérisé en ce que** le jonc comporte une série d'évidements (19; 19A; 19B) dont la profondeur décroît progressivement de la région de la fente (21) à la région (20) diamétralement opposée.

22. Jonc suivant l'une quelconque des revendications 19 à 21 lorsqu'elles dépendent de la revendication 18, **caractérisé en ce que** la profondeur des évidements (19B) varie d'une part dans le sens radial, d'autre part dans le sens axial.

23. Jonc suivant l'une quelconque des revendications 14 à 22, **caractérisé en ce que** la section courante du jonc (7) est pleine et à profil convexe.

24. Jonc suivant l'une quelconque des revendications 14 à 23, **caractérisé en ce que** le jonc (7) comporte, de part et d'autre de la fente (21), des ouvertures radiales (24).

## Patentansprüche

1. verriegelte Verbindung zwischen Kanalisationselementen (2, 4), insbesondere zwischen Rohrleitungen, umfassend einen Verschluss (3) für ein erstes Kanalisationselement (4), einen einseitigen Ansatz (1) für ein zweites Kanalisationselement (2), der in diesen Verschluss eingesetzt ist, wobei eine Ringdichtung (5) dazwischen angeordnet ist, eine Erhöhung (6), die mit dem einseitigen Ansatz verbunden ist, einen metallischen Verriegelungsring (7), der einen Schlitz (21) aufweist, welcher Ring um den einseitigen Ansatz genau hinter der Erhöhung angeordnet und in der Lage ist, durch Kontraktion und Kreuzung seiner Enden, um in den Verschluss einzudringen, und sodann Aufdehnung, um die Erhöhung durchzudrücken, und Loslassen, um den einseitigen Ansatz zu verklemmen, angeordnet zu werden, und eine hintere Stützfläche (9) für den Ring, die mit dem Verschluss verbunden ist, **dadurch gekennzeichnet, dass** der geschlitzte Ring (7) auf dem Umfang mindestens einer Fläche (15 bis 18) mindestens eine Aussparung (19; 19A; 19B) aufweist, die derart ausgeführt ist, dass sie die Kontraktion, die Kreuzung und die Aufdehnung des Ringes (7) ermöglicht, die für die Befestigung des Ringes erforderlich sind.

2. Verbindung nach Anspruch 1, **dadurch gekennzeichnet, dass** mindestens eine Aussparung (19A) eine Axialaussparung ist, die in einer axialen Endfläche (17) der Verbindung vorgesehen ist und in die radial innere Fläche (15) der Verbindung (7) mündet, die den einseitigen Ansatz (1) umschließt.

3. Verbindung nach Anspruch 1, **dadurch gekennzeichnet, dass** die Aussparung(en) (19) radiale Aussparungen sind, die in eine radiale Endfläche münden, vorzugsweise in die radial äußere Fläche (16) des Ringes (7), und nicht in die radial gegenüberliegende Fläche münden.

4. Verbindung nach Anspruch 1 oder 2, **dadurch gekennzeichnet, dass** die Aussparung(en) (19A) axiale Aussparungen sind, die in eine axiale Endfläche münden, vorzugsweise in die Rückseite (17) des Ringes (7), und nicht in die axial gegenüberliegende Fläche münden.

5. Verbindung nach Anspruch 1 oder 2, **dadurch gekennzeichnet, dass** der Ring eine Reihe von Aussparungen umfasst, die in jeder der gegenüberliegenden Flächen vorgesehen sind, welche beiden Reihen von Aussparungen vorzugsweise auf dem Umfang zueinander versetzt sind.

6. Verbindung nach Anspruch 1 oder 2, **dadurch gekennzeichnet, dass** der Ring mindestens eine radiale Aussparung umfasst, die in die radiale Endfläche mündet und nicht in die gegenüberliegende radiale Endfläche des Ringes (7) mündet, und mindestens eine weitere axiale Aussparung, die in eine axiale Endfläche des Ringes mündet und nicht in die gegenüberliegende axiale Endfläche des Ringes mündet.

7. Verbindung nach Anspruch 1 oder 2, **dadurch gekennzeichnet, dass** mindestens eine Aussparung (19B) einen axialen Teil (19A) und einen radialen Teil (19) umfasst, die sich verlängern, wobei der radiale Teil (19) in eine radiale Endfläche des Ringes mündet und nicht in die gegenüberliegende radiale Endfläche mündet, wobei der axiale Teil (19A) in eine axiale Endfläche des Ringes mündet und nicht in die gegenüberliegende axiale Endfläche mündet.

8. Verbindung nach einem der Ansprüche 1 bis 7, **dadurch gekennzeichnet, dass** der Ring mindestens eine erste Aussparung (19; 19A; 19B) umfasst, die sich in dem diametral dem Schlitz (21) des Ringes (7) gegenüberliegenden Bereich oder in der Nähe dieses Bereichs befindet, und mindestens eine zweite Aussparung nahe dem Schlitz, die eine größere Tiefe als die erste Aussparung aufweist.

9. Verbindung nach Anspruch 8, **dadurch gekennzeichnet, dass** die Stelle des Ringes, die dem Schlitz (21) diametral gegenüberliegt, keine Aussparung aufweist.

10. Verbindung nach Anspruch 8 oder 9, **dadurch gekennzeichnet, dass** der Ring eine Reihe von Aussparungen (19; 19A; 19B) umfasst, deren Tiefe progressiv von dem Bereich des Schlitzes (21) zu dem diametral gegenüberliegenden Bereich (20) abnimmt,

11. Verbindung nach einem der Ansprüche 8 bis 10, wobei diese von dem Anspruch 7 abhängen, **dadurch gekennzeichnet, dass** die Tiefe der Aussparungen (19B) einerseits in Radialrichtung und andererseits in Axialrichtung variiert.

12. Verbindung nach einem der Ansprüche 1 bis 11, **dadurch gekennzeichnet, dass** der laufende Querschnitt des Ringes (7) voll ist und ein konvexes Profil aufweist.

13. Verbindung nach einem der Ansprüche 1 bis 12, **dadurch gekennzeichnet, dass** der Ring (7) beiderseits des Schlitzes (21) radiale Öffnungen (24) umfasst.

14. Geschlitzter Metallring (7) für eine verriegelte Verbindung zwischen Kanalisationselementen, insbesondere Rohrleitungen, welcher Ring auf dem Umfang von mindestens einer Fläche (15 bis 18) mindestens eine Aussparung (19; 19A; 19B) umfasst, die derart ausgeführt ist, dass sie die Verformungen des Ringes (7) ermöglicht, die bei der Montage des Ringes erforderlich sind, **dadurch gekennzeichnet, dass** mindestens eine Axialaussparung (19A) in einer axialen Endfläche (17) des Ringes vorgesehen ist und in die radial innere Fläche (15) des Ringes (7) mündet, welche dazu bestimmt ist, einen einseitigen Ansatz (1) eines der Kanalisationselemente (2) zu umschließen.

15. Ring nach Anspruch 14, **dadurch gekennzeichnet, dass** die axiale(n) Aussparung(en) (19A) in eine axiale Endfläche münden, vorzugsweise in die Rückseite (17) des Ringes (7), und nicht in die gegenüberliegende axiale Endfläche münden.

16. Ring nach Anspruch 14, **dadurch gekennzeichnet, dass** der Ring eine Reihe von Aussparungen umfasst, die in jeder von zwei gegenüberliegenden Flächen des Ringes vorgesehen sind, wobei die beiden Reihen von Aussparungen vorzugsweise auf dem Umfang zueinander versetzt sind.

17. Ring nach Anspruch 14, **dadurch gekennzeichnet, dass** der Ring mindestens eine radiale Aussparung umfasst, die in eine radiale Endfläche des Ringes (7) mündet und nicht in die gegenüberliegende axiale Endfläche des Ringes (7) mündet, und mindestens eine weitere axiale Aussparung, die in eine axiale Endfläche des Ringes mündet und nicht in die gegenüberliegende axiale Endfläche des Ringes mündet.

18. , Ring nach Anspruch 14, **dadurch gekennzeichnet, dass** mindestens eine Aussparung (19B) einen axialen Teil (19A) und einen radialen Teil (19) umfasst, die sich verlängern, wobei der radiale Teil (19) in eine radiale Endfläche des Ringes mündet und nicht in die gegenüberliegende radiale Endfläche mündet, wobei der axiale Teil (19A) in eine axiale Endfläche des Ringes mündet und nicht in die gegenüberliegende axiale Endfläche mündet.

19. Ring nach einem der Ansprüche 14 bis 18, **dadurch gekennzeichnet, dass** der Ring mindestens eine erste Aussparung (19; 19A; 19B) umfasst, die sich in dem, dem Schlitz (21) des Ringes (7) diametral gegenüberliegenden Bereich oder in der Nähe dieses Bereichs befindet, und mindestens eine zweite Aussparung in der Nähe des Schlitzes, die eine größere Tiefe als jene der ersten Aussparung aufweist.

20. Ring nach Anspruch 19, **dadurch gekennzeichnet, dass** die Stelle des dem Schlitz (21) diametral gegenüberliegenden Ringes keine Aussparung aufweist.

21. Ring nach Anspruch 19 oder 20, **dadurch gekennzeichnet, dass** der Ring eine Reihe von Aussparungen (19; 19A; 19B) umfasst, deren Tiefe progressiv von dem Bereich des Schlitzes (21) bis zu dem diametral gegenüberliegenden Bereich (20) abnimmt.

22. Ring nach einem der Ansprüche 19 bis 21, wobei diese von dem Anspruch 18 abhängen, **dadurch gekennzeichnet, dass** die Tiefe der Aussparungen (19B) einerseits in Radialrichtung und andererseits in Axialrichtung variiert.

23. Ring nach einem der Ansprüche 14 bis 22, **dadurch gekennzeichnet, dass** der laufende Querschnitt des Ringes (7) voll ist und ein konvexes Profil aufweist.

24. Ring nach einem der Ansprüche 14 bis 23, **dadurch gekennzeichnet, dass** der Ring (7) beiderseits des Schlitzes (21) radiale Öffnungen (24) umfasst.

## Claims

1. Locked joint between pipework elements (2, 4), in particular between pipes, of the type comprising a socket (3) of a first pipework element (4), a spigot (1) of a second pipework element (2) pushed into this socket with interposition of an annular packing (5), a relief (6) integral with the spigot, a metallic locking ring (7) having a split (21). the ring being arranged around the spigot just behind the said relief and capable of being put in place by contraction and crossing of its extremities to penetrate into the socket, then expansion to allow the said relief to pass and relaxation to clasp the spigot, and a rear bearing surface (9) for the ring, integral with the socket, **characterised in that** the split ring (7) has on the periphery of at least one face (15 to 18) at least one recess (19; 19A; 19B) adapted to enable the contraction, the crossing and the expansion of the ring (7), required for the assembly of the joint.

2. Joint according to Claim 1, **characterised in that** at least one recess (19A) is an axial recess formed in an axial end face (17) of the ring and emerges into the radially inner surface (15) of the ring (7), which surface clasps the spigot (1).

3. Joint according to Claim 1, **characterised in that** the recess or recesses (19) are radial recesses emerging into a radial end face, preferably into the radially outer face (16), of the ring (7) and not emerging into the opposite radial end face.

4. Joint according to Claim 1 or 2, **characterised in that** the recess or recesses (19A) are axial recesses emerging into an axial end face, preferably into the rear face (17), of the ring (7) and not emerging into the opposite axial end face.

5. Joint according to Claim 1 or 2, **characterised in that** the ring has a series of recesses formed in each of two opposite faces, the two series of recesses being preferably offset circumferentially with respect to one another.

6. Joint according to Claim 1 or 2, **characterised in that** the ring comprises at least one radial recess emerging into a radial end face and not emerging into the opposite radial end face of the ring (7), and at least one other axial recess emerging into an axial end face of the ring and not emerging into the opposite axial end face of the ring.

7. Joint according to Claim 1 or 2, **characterised in that** at least one recess (19B) comprises an axial part (19A) and a radial part (19) which are a continuation one of the other, the radial part (19) emerging into a radial end face of the ring and not emerging into the opposite radial end face, the axial part (19A) emerging into an axial end face of the ring and not emerging into the opposite axial end face.

8. Joint according to any one of Claims 1 to 7, **characterised in that** the ring comprises at least one first recess (19; 19A; 19B) situated in the region diametrically opposite the split (21) of the ring (7) or in the vicinity of this region, and at least one second recess close to the split and having a depth greater than that of the said first recess.

9. Joint according to Claim 8, **characterised in that** the location of the ring diametrically opposite the split (21) does not have any recesses.

10. Joint according to Claim 8 or 9, **characterised in that** the ring has a series of recesses (19; 19A; 19B) whose depth decreases progressively from the region of the split (21) to the region (20) diametrically opposite.

11. Joint according to any one of Claims 8 to 10 when they depend on Claim 7, **characterised in that** the depth of the recesses (19B) varies on the one hand in the radial direction and on the other hand in the axial direction.

12. Joint according to any one of Claims 1 to 11, **characterised in that** the normal cross-section of the ring (7) is solid and with a convex profile.

13. Joint according to any one of Claims 1 to 12, **characterised in that** the ring (7) has radial openings (24) on both sides of the split (21).

14. Metallic split ring (7) for a locked joint between pipework elements, in particular between pipes, the ring comprising on the periphery of at least one face (15 to 18) at least one recess (19; 19A; 19B) adapted to enable the deformations of the ring (7) required for the assembly of the joint, **characterised in that** at least one axial recess (19A) is formed in an axial end face (17) of the ring and emerges into the radially inner surface (15) of the ring (7), which surface is intended for clasping a spigot (1) of one of the pipework elements (2).

15. Ring according to Claim 14, **characterised in that** the axial recess or recesses (19A) emerge into an axial end face, preferably into the rear face (17), of the ring (7) and do not emerge into the opposite axial end face.

16. Ring according co Claim 14, **characterised in that** the ring has a series of recesses formed in each of two opposite faces of the ring, the two series of recesses being preferably offset circumferentially with respect to one another.

17. Ring according to Claim 14, **characterised in** chat the ring comprises at least one radial recess emerging into a radial end face of the ring (7) and not emerging into the opposite radial end face of the ring (7), and at least one other axial recess emerging into an axial end face of the ring and not emerging into the opposite axial end face of the ring.

18. Ring according to Claim 14, **characterised in that** at least one recess (19B) comprises an axial part (19A) and a radial part (19) which are a continuation one of the other, the radial part (19) emerging into a radial end face of the ring and not emerging into the opposite radial end face, the axial part (19A) emerging into an axial end face of the ring and not emerging into the opposite axial end face.

19. Ring according to any one of Claims 14 to 18, **characterised in that** the ring comprises at least one first recess (19; 19A; 19B) situated in the region diametrically opposite the split (21) of the ring (7) or in the vicinity of this region, and at least one second recess close to the split and having a depth greater than that of the said first recess.

20. Ring according to claim 19, **characterised in that** the location of the ring diametrically opposite the split (21) does not have any recesses.

21. Ring according to Claim 19 or 20, **characterised in that** the ring has a series of recesses (19; 19A; 19B) whose depth decreases progressively from the region of the split (21) to the region (20) diametrically opposite.

22. Ring according to any one of claims 19 to 21 when they depend on Claim 18, **characterised in that** the depth of the recesses (19B) varies on the one hand in the radial direction and on the other hand in the axial direction.

23. Ring according to any one of Claims 14 to 22, **characterised in that** the normal section of the ring (7) is solid and with a convex profile.

24. Ring according co any one of Claims 14 to 23, **characterised in that** the ring (7) has radial openings (24) on both sides of the split (21).
